(19) Europäisches Patentamt
European Patent Office
Office européen des brevets

(11) **EP 3 006 097 B1**

(12) **FASCICULE DE BREVET EUROPEEN**

(45) Date de publication et mention
de la délivrance du brevet:
**15.11.2023 Bulletin 2023/46**

(21) Numéro de dépôt: **15184174.9**

(22) Date de dépôt: **08.09.2015**

(51) Classification Internationale des Brevets (IPC):
**B01D 53/02** (2006.01)    **B01D 53/10** (2006.01)
**B01D 53/83** (2006.01)

(52) Classification Coopérative des Brevets (CPC):
**B01D 53/83; B01D 53/025; B01D 53/10;**
B01D 2251/404; B01D 2251/602; B01D 2251/604;
B01D 2251/606; B01D 2258/0291

(54) **INSTALLATION ET PROCEDE DE TRAITEMENT A LA CHAUX DE FUMEES D'INCINERATION D'ORDURES MENAGERES**

ANLAGE UND VERFAHREN ZUR BEHANDLUNG MIT KALK VON VERBRENNUNGSRAUCHGASEN AUS DER VERBRENNUNG VON HAUSMÜLL

FACILITY AND METHOD FOR TREATING FUMES FROM DOMESTIC WASTE INCINERATION WITH LIME

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **07.10.2014 FR 1459599**

(43) Date de publication de la demande:
**13.04.2016 Bulletin 2016/15**

(73) Titulaire: **Vinci Construction Grands Projets
92000 Nanterre (FR)**

(72) Inventeurs:
• **CONRAD, Yannick
35398 Gießen (DE)**
• **THIBAUT, Romain
78360 Montesson (FR)**

(74) Mandataire: **Regimbeau
20, rue de Chazelles
75847 Paris Cedex 17 (FR)**

(56) Documents cités:
**EP-A1- 0 882 490      WO-A1-2004/026443
US-A1- 2005 031 515**

**Description**

**DOMAINE TECHNIQUE**

La présente invention concerne une installation et un procédé de traitement sec ou semi-sec à la chaux de fumées d'incinération d'ordures ménagères.

**ETAT DE LA TECHNIQUE ANTERIEUR**

Un procédé de traitement des fumées d'incinération d'ordures ménagères de l'art antérieur peut comporter une première étape de dépoussiérage des cendres contenues dans les fumées issues de l'incinération d'ordures ménagères grâce à un électrofiltre.

Le procédé comporte ensuite généralement une étape dite « d'abattement des polluants » au cours de laquelle on injecte de la chaux ou du bicarbonate de soude dans les fumées. Le réactif, sous forme de poudre, réagit alors avec les acides contenus dans les fumées d'incinération pour former des sels ce qui permet de neutraliser les acides contenus dans les fumées. On parle de réaction gaz/solide. Dans l'exemple de la chaux, les principales formules de neutralisation sont :

$$Ca(OH)_2 + HCl \rightarrow CaCl_2 + 2H_2O$$

$$Ca(OH)_2 + SO_2 + 0,5O_2 \rightarrow CaSO_4 + H_2O$$

$$Ca(OH)_2 + HF \rightarrow CaF_2 + 2H_2O$$

Le procédé peut également permettre de capter les métaux lourds et les dioxines contenus dans les fumées par absorption en injectant du charbon actif dans les fumées. Le traitement des fumées comporte ensuite une étape de filtration finale permettant de capter les sels de réaction, les cendres volantes et le réactif en excès. Cette étape de filtration finale a généralement lieu dans un filtre à manche qui retient une partie des polluants contenus dans les fumées et produit des fumées propres et des résidus appelés résidus de fumées d'incinération d'ordures ménagères ou REFIOM (mélange de cendres résiduelles, de réactifs n'ayant pas réagi et de sous-produits de réaction).

Enfin le procédé peut comporter une étape de traitement des oxydes d'azote qui peut se faire préalablement à l'étape de dépoussiérage, au sein du four, ou à la suite de l'étape d'abattement des polluants.

L'étape d'abattement des polluants est primordiale dans le procédé de traitement des fumées. Afin d'augmenter son efficacité, la température et l'humidité des fumées doit être contrôlée. En outre, afin d'optimiser la consommation en réactif, on peut recirculer les REFIOM produits par le filtre à manche. En effet, les REFIOM contiennent le réactif qui n'a pas réagi avec les fumées et le fait de recirculer une partie des REFIOM permet de diminuer la consommation en réactif. Une partie des REFIOM est purgée. La recirculation est particulièrement importante si le réactif utilisé est de la chaux qui n'a pas subi de traitement préalable et qui présente une réactivité moindre.

Ainsi, dans l'art antérieur, il est connu de recirculer une partie des REFIOM en amont du filtre à manche et de mélanger avec les fumées à traiter et des réactifs neufs. Si le réactif est de la chaux, on peut également mélanger les REFIOM recirculés avec de l'eau afin d'en augmenter la réactivité.

Pour cela, selon un procédé de l'art antérieur, les REFIOM sont d'abord mélangés avec la chaux neuve dans une vis dans laquelle on injecte de l'eau via une buse d'humidification positionnée au-dessus de la vis. Le mélange obtenu est ensuite injecté dans les fumées à traiter en amont du filtre à manche.

Un autre procédé de l'art antérieur propose de mélanger d'une part la chaux neuve avec les fumées à traiter et d'autre part d'humidifier les REFIOM recirculés grâce à des buses d'humidification positionnées au-dessus d'un mélangeur contenant les REFIOM recirculés. Les REFIOM humidifiés sont ensuite injectés dans le mélange fumées à traiter-chaux.

Toutefois dans les deux cas, le mélange obtenu n'est pas homogène de sorte qu'il se forme des boulettes de REFIOM humidifiés, ce qui encrasse l'installation de traitement des fumées et diminue l'efficacité de contact des réactifs ainsi agglomérés avec les polluants.

Il a donc été proposé dans l'art antérieur d'installer un système de vidange qui permet d'évacuer les boulettes formées. Une autre solution proposée dans l'art antérieur consiste à installer un tambour dans l'installation de traitement des fumées qui permet de casser les boulettes formées.

Toutefois, ces solutions compliquent les installations de traitement des fumées et elles ne sont que partiellement efficaces.

Le document EP-0 882 490 divulgue une installation de traitement de fumées comportant :

- des moyens d'injection d'un additif dans les fumées ;
- des moyens de filtration aptes à purifier les fumées et à produire des résidus d'épuration ; et
- une boucle de recirculation agencée pour récupérer une partie des résidus pour les réinjecter en amont des moyens de filtration, la boucle de recirculation comportant des moyens d'injection d'eau sur les résidus et des moyens de mélange agencés pour homogénéiser les résidus humidifiés puis les injecter dans les fumées d'incinération en amont des moyens de filtration.

## EXPOSE DE L'INVENTION

L'invention vise à remédier aux inconvénients de l'état de la technique en proposant une installation de traitement des fumées qui soit aussi efficace que celles de l'art antérieur, y compris lorsque l'on utilise de la chaux non traitée, mais dans laquelle il ne se forme pas de boulettes encrassant l'installation.

Pour ce faire, l'invention propose de former un film de REFIOM vertical et d'épaisseur sensiblement constante au travers duquel on injecte de l'eau suivant une direction sécante à la direction du film de REFIOM. Les REFIOM ainsi humidifiés sont ensuite mélangés au mélange fumées à traiter-chaux. Une telle installation permet d'éviter la formation de boulettes dans l'installation et donc elle permet de limiter l'encrassement de l'installation malgré l'utilisation d'une boucle de recirculation permettant de recirculer une partie des REFIOM. La chaux résiduelle présente dans les REFIOM recirculés est ainsi activée uniformément, ce qui augmente l'efficacité du dispositif en optimisant sa consommation en chaux neuve.

Plus précisément, un premier aspect de l'invention concerne une installation de traitement à la chaux de fumées d'incinération d'ordures ménagères selon la revendication 1

Ainsi, le fait de former un film de REFIOM d'épaisseur sensiblement constante et d'injecter l'eau sur ce film permet de former des REFIOM humidifiés de façon homogène de sorte que la formation de boulettes est limitée. Un tel déversoir en forme de pyramide tronquée permet de former facilement un film de REFIOM vertical d'épaisseur sensiblement constante.

L'installation selon le premier aspect peut également présenter une ou plusieurs des caractéristiques ci-après prises indépendamment ou selon toutes les combinaisons techniquement possibles.

Selon différents modes de réalisation, l'installation peut être une installation de traitement sec ou semi-sec des fumées. On appelle « traitement sec » des fumées un traitement des fumées comportant une neutralisation des polluants acides au sein de moyens de filtration des poussières par une réaction gaz/solide, sans refroidissement préalable des fumées par pulvérisation d'eau. On appelle « traitement semi-sec » des fumées un traitement des fumées comportant une neutralisation des polluants acides au sein de moyens de filtration des poussières par une réaction gaz/solide, avec refroidissement préalable des fumées par pulvérisation d'eau.

La largeur intérieure de l'extrémité inférieure du déversoir est de préférence réglable initialement, avant la première mise en marche de l'installation de façon à optimiser l'épaisseur du film de REFIOM de façon à ce que les REFIOM humidifiés soient le plus homogène possible. La largeur intérieure de l'extrémité inférieure du déversoir et donc l'épaisseur du film de REFIOM créé est ensuite de préférence la même quel que soit le débit de REFIOM recirculé. En effet, cette épaisseur du film de REFIOM est optimum pour maximiser l'homogénéité des REFIOM humidifiés et donc minimiser les formations de boulettes.

Le déversoir comporte de préférence au moins deux parois latérales inclinées reliant l'extrémité supérieure à l'extrémité inférieure. Chaque paroi latérale inclinée forme de préférence, avec un plan vertical, un angle inférieur à 30°.

Avantageusement, l'installation comporte des moyens de réglage agencés pour modifier la largeur intérieure de l'extrémité inférieure du déversoir, ce qui permet de modifier l'épaisseur du film de REFIOM formé. En effet, le film de REFIOM formé est d'épaisseur constante lorsque l'installation est en fonctionnement. Toutefois, préalablement à la mise en route de l'installation, il est possible de régler la largeur intérieure de l'extrémité inférieure du déversoir de façon à compenser les éventuelles imprécisions de dimensionnement.

Pour cela, les moyens de réglage comportent de préférence des moyens permettant de modifier l'angle d'inclinaison des parois latérales inclinées du déversoir de façon à modifier la largeur intérieure de l'extrémité inférieure du déversoir. Les moyens de réglage permettent ainsi de modifier l'épaisseur du film de REFIOM formé.

La longueur intérieure de l'extrémité inférieure du déversoir, et donc la longueur intérieure du film de REFIOM créé dépend de préférence du débit de REFIOM recirculé. Ainsi, le déversoir présente de préférence une extrémité inférieure d'une longueur intérieure comprise entre 90% et 110%, de préférence égale, à un nombre L donné par

$$L = \dot{m}[\text{kg/h}]/\text{l} \ [\text{mm}]$$

Où :

- $\dot{m}$[kg/h] est le débit en kilogramme par heure de REFIOM introduits dans l'extrémité supérieure du déversoir ;
- l est la largeur intérieure en millimètres du déversoir.

L'extrémité supérieure du déversoir présente de préférence une longueur intérieure égale à la longueur intérieure de l'extrémité inférieure.

Avantageusement, le déversoir présente une hauteur comprise entre 90% et 110%, de préférence égale, à un nombre H donné par :

$$H = \ln \left( \dot{m}[kg/h]/4 \right) \times 350 \ [mm]$$

Où:

- $\dot{m}$[kg/h] est le débit en kilogramme par heure de REFIOM introduits dans l'extrémité supérieure du déversoir, ce qui permet de former un film homogène quel que soit le débit de REFIOM recirculé.

Avantageusement, les moyens de formation du film de REFIOM comportent une écluse rotative agencée pour décharger un débit constant de REFIOM dans l'extrémité supérieure du déversoir. L'écluse rotative permet d'assurer une alimentation constante du déversoir de façon à garantir la formation d'un film continu de REFIOM d'épaisseur constante en sortie du déversoir. Pour cela, l'écluse rotative est de préférence gavée de façon à obtenir un débit constant.

Pour gaver l'écluse rotative, les moyens de formation du film de REFIOM comportent de préférence une trémie d'alimentation qui est alimentée par une vis qui transporte les REFIOM recirculés.

Avantageusement, les moyens d'injection d'eau comportent une rangée de buses d'humidification agencées pour injecter de l'eau dans le film de REFIOM suivant une direction sécante au film de REFIOM. Le nombre et le type de buses d'humidification sont adaptés en fonction de la longueur intérieure du déversoir pour permettre une couverture totale du film de REFIOM.

Avantageusement, les buses d'humidification sont agencées pour injecter de l'eau suivant une direction formant un angle β avec le film de REFIOM, l'angle β étant compris entre 35° et 55°, de préférence égal à 45°. En effet, il a été constaté qu'un tel angle permet de former des REFIOM humidifiés d'une très grande homogénéité.

Les moyens de filtration des poussières comportent de préférence un filtre à manche.

Un deuxième aspect de l'invention concerne un procédé de traitement à la chaux de fumées d'incinération d'ordures ménagères selon la revendication 10.

Selon différents modes de réalisation, le procédé peut être un procédé de traitement sec ou semi-sec des fumées.

BREVES DESCRIPTION DES FIGURES

D'autres caractéristiques et avantages de l'invention ressortiront à la lecture de la description détaillée qui suit, en référence aux figures annexées, qui illustrent :

- La figure 1, une représentation schématique d'une installation de traitement sec à la chaux de fumées d'incinération d'ordures ménagères selon un mode de réalisation de l'invention ;
- La figure 2, une représentation schématique de la boucle de recirculation et des moyens de formation d'un film de REFIOM de l'installation de la figure 1 ;
- La figure 3, une représentation schématique en perspective d'un déversoir utilisé dans l'installation de la figure 1 ;
- La figure 4, une représentation schématique en vue de côté du déversoir de la figure 3 ;
- La figure 5, une représentation schématique des moyens d'injection d'eau de l'installation de la figure 1.

Pour plus de clarté, les éléments identiques ou similaires sont repérés par des signes de références identiques sur l'ensemble des figures.

DESCRIPTION DETAILLEE D'AU MOINS UN MODE DE REALISATION

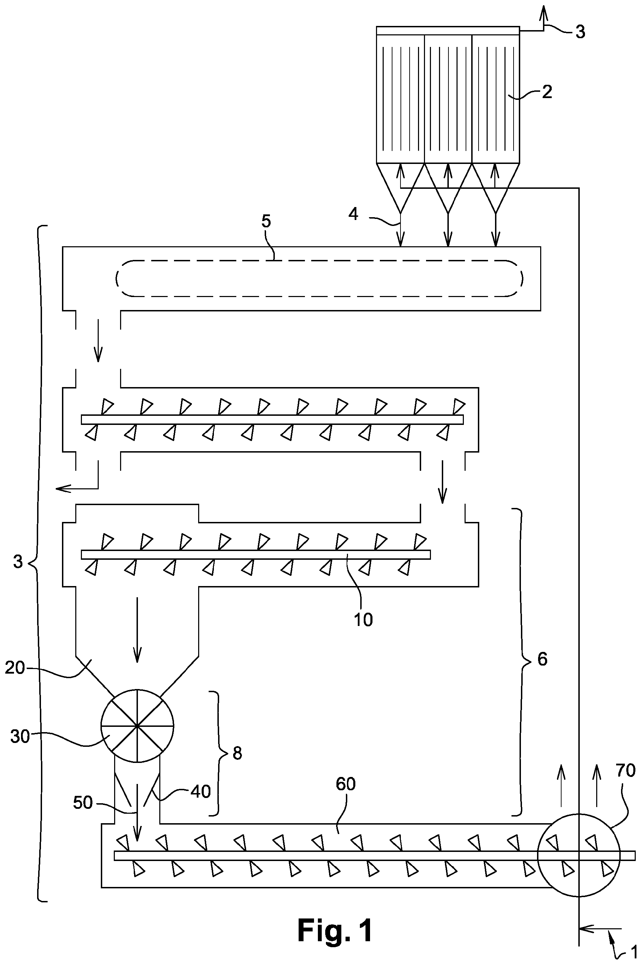

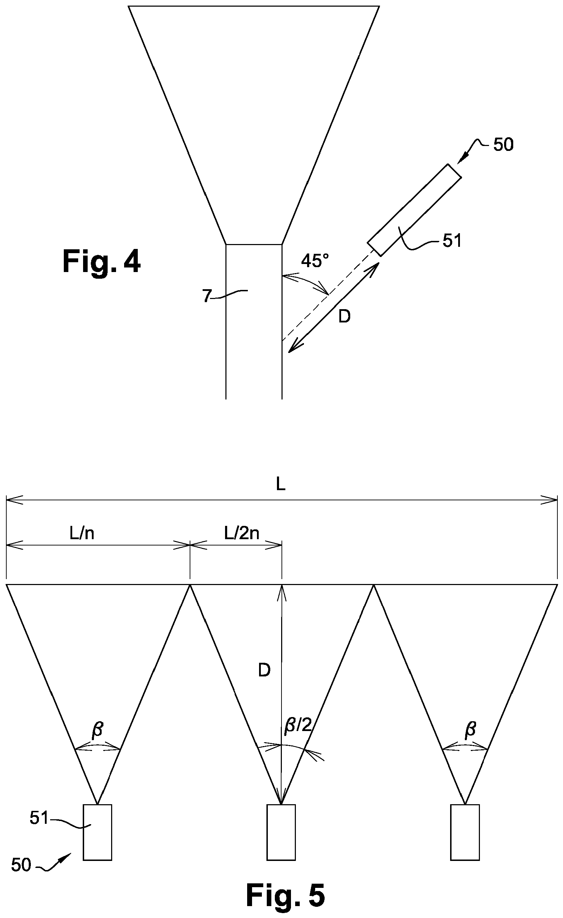

Une installation de traitement sec à la chaux de fumées d'incinération d'ordures ménagères selon un mode de réalisation va maintenant être décrite en référence aux figures 1 à 5.

Par traitement sec, on entend un traitement des fumées comportant une neutralisation des polluants acides au sein de moyens de filtration des poussières par une réaction gaz/solide, sans humidification préalable des fumées. Le réactif solide peut être de la chaux (chaux vive, chaux éteinte, humidifiée ou non) ou du bicarbonate de sodium.

L'installation comporte des moyens d'injection 1 d'un réactif solide dans les fumées à traiter. Ce réactif solide est de la chaux. Le réactif injecté est de préférence de la chaux hydratée, qui n'a pas subi de traitement. En effet, l'installation et le procédé selon l'invention permettent d'utiliser de la chaux qui a un rendement moindre que la chaux à haute surface spécifique.

L'installation comporte également des moyens de filtration 2 des poussières aptes à purifier les fumées d'incinération et à produire des résidus d'épuration des fumées d'incinération des ordures ménagères, appelés « REFIOM ». Ces moyens de filtration 2 comportent de préférence un filtre à manche. Ainsi, lorsque les fumées à traiter mélangées à la chaux traversent les moyens de filtration 2, les sels de réaction formés par la réaction entre la chaux et les acides contenus dans les fumées sont filtrés par les moyens de filtration 2. Les moyens de filtration 2 permettent également de filtrer les cendres volantes et la chaux injectée en excès dans les fumées à traiter. Ainsi, les moyens de filtration 2 sont agencés pour produire :

- des fumées propres 3 et
- des résidus d'épuration des fumées d'incinération d'ordures ménagères, également appelés REFIOM. Les REFIOM sont des résidus solides qui sont produits par les moyens de filtration lors du passage des fumées mélangées à la chaux dans les moyens de filtration. Les REFIOM comportent donc des poussières, des sels de réaction, des polluants acides, des métaux lourds, ainsi que de la chaux qui n'a pas réagi.

L'installation comporte également une boucle de recirculation 3 agencée pour récupérer une partie des REFIOM produits par les moyens de filtration 2 et les réinjecter une fois humidifiés dans les fumées à traiter mélangées à la chaux en amont du filtre à manche.

La boucle de recirculation comporte pour cela des moyens permettant de former des REFIOM humidifiés de manière homogène.

Pour cela, la boucle de recirculation comporte une sortie 4 permettant d'extraire des moyens de filtration 2 une partie des REFIOM produits.

La boucle de recirculation comporte également un convoyeur à chaîne 5 permettant de transporter les REFIOM.

La boucle de recirculation comporte également des moyens de formation 6 configurés pour former un film de REFIOM vertical et d'épaisseur sensiblement constante.

Pour cela, les moyens de formation 6 comportent une vis 10 qui alimente une trémie d'alimentation 20 qui permet de gaver une écluse rotative 30 de façon à obtenir un débit constant de REFIOM en sortie de l'écluse rotative 30.

L'écluse rotative 30 alimente ainsi avec un débit constant de REFIOM un déversoir configuré pour former un film de REFIOM vertical et d'épaisseur sensiblement constante.

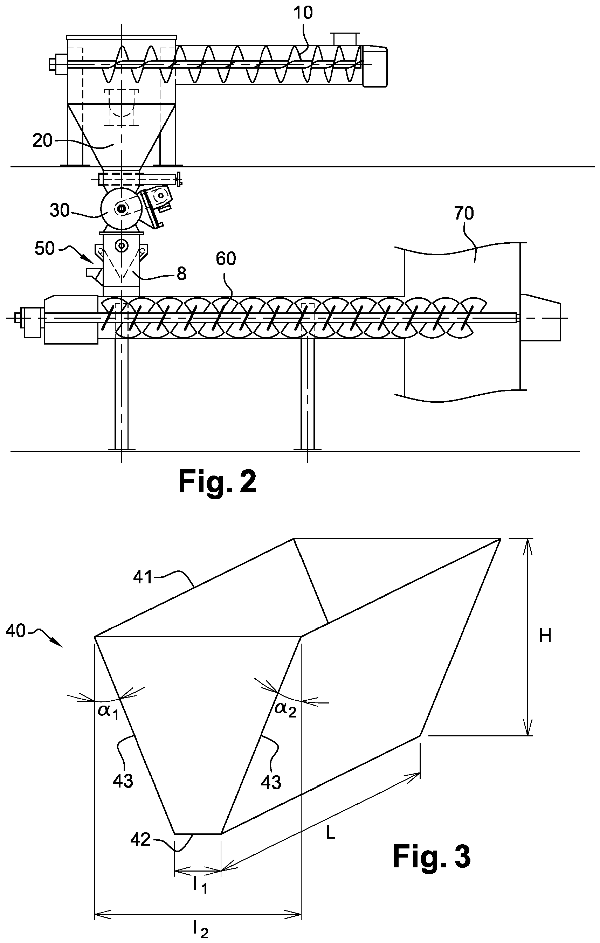

Pour cela, le déversoir 40 présente une forme de pyramide tronquée comme représenté sur la figure 3. Le déversoir 40 présente une extrémité supérieure 41 et une extrémité inférieure 42. L'extrémité supérieure 41 et l'extrémité inférieure 42 présentent chacune une forme rectangulaire.

L'extrémité inférieure 42 présente une largeur intérieure l1 comprise entre 30 et 50 mm et de préférence égale à 40 mm. En effet, une telle largeur intérieure l1 permet de former un film de REFIOM d'épaisseur constante.

Cependant, afin de se donner un degré d'ajustement, il est préférable de pouvoir faire varier la largeur intérieure l1 avant le démarrage de l'installation, de façon à optimiser l'épaisseur du film de REFIOM formé de façon à avoir des REFIOM humidifiés le plus homogènes possibles. Cela permet de modifier l'épaisseur du film de REFIOM afin de pouvoir réajuster le débit puisque les hypothèses de dimensionnement ont leur part d'imprécision. Une fois la configuration idéale trouvée, on n'y touche plus de sorte qu'en fonctionnement l'épaisseur du film de REFIOM formé est constante.

Pour cela, l'installation comporte de préférence des moyens de réglage agencés pour modifier la largeur intérieure l1 de l'extrémité inférieure du déversoir. Ces moyens de réglage permettent de préférence de faire varier l'angle d'inclinaison des parois latérales inclinées 43 du déversoir.

En fonctionnement, la largeur intérieure l1 de l'extrémité inférieure du déversoir, et donc l'épaisseur du film de REFIOM, est de préférence constante quel que soit le débit de REFIOM recirculé.

La longueur intérieure de l'extrémité inférieure 42 est déterminée en fonction du débit de REFIOM que l'on veut recirculer. Ainsi, l'extrémité inférieure 42 présente de préférence une longueur intérieure comprise entre 90% et 110%, de préférence égale, à un nombre L donné par

$$L = \dot{m}[\text{kg/h}]/l1\ [\text{mm}]$$

Où :

- $\dot{m}$[kg/h] est le débit en kilogramme par heure de REFIOM introduits dans l'extrémité supérieure du déversoir ;
- l1 est la largeur intérieure en millimètres du déversoir.

On peut ainsi avoir une vitesse nominale constante d'écoulement du film de REFIOM en sortie du déversoir quel que soit le débit de REFIOM recirculé.

Par ailleurs, l'extrémité supérieure 41 présente de préférence une longueur intérieure égale à la longueur intérieure de l'extrémité inférieure 42.

La hauteur du déversoir dépend également du débit de REFIOM à recirculer. Ainsi, la hauteur du déversoir est de préférence comprise entre 90% et 110%, et de manière plus préférentielle égale, à un nombre H donné par :

$$H = \ln\,(\dot{m}[kg/h]/4) \times 350\ [mm]$$

où :

- $\dot{m}[kg/h]$ est le débit en kilogramme par heure de REFIOM introduits dans l'extrémité supérieure du déversoir.

Une fois ces dimensions fixées, on peut choisir différentes inclinaisons pour les parois latérales 43 du déversoir. Les deux parois latérales ne présentent pas nécessairement le même angle d'inclinaison $\alpha 1$, $\alpha 2$ par rapport à un plan vertical. Par contre, l'angle d'inclinaison $\alpha 1$, $\alpha 2$ de chaque paroi latérale 43 inclinée par rapport à un plan vertical est de préférence inférieur ou égal à 30°.

Une telle géométrie pour le déversoir permet de former un film de REFIOM 7 qui sort par l'extrémité inférieure 42 du déversoir, qui présente une épaisseur sensiblement constante et qui est choisie de façon à permettre une humidification homogène des REFIOM recirculés.

L'installation comporte également des moyens d'injection d'eau 50 sur le film de REFIOM. Ces moyens d'injection d'eau 50 sont agencés pour humidifier de manière homogène le film de REFIOM 7 formé en sortie du déversoir. Les moyens d'injection d'eau 50 comportent des buses d'humidification 51.

Les buses d'humidification 51 sont de préférence inclinées de façon à ce que l'angle formé entre le film de REFIOM 7 et l'eau injectée soit sensiblement égal à 45°.

Par ailleurs, le nombre et le type de buses d'humidification 51 sont de préférence choisis afin d'avoir une distance D entre les buses d'humidification et le film de REFIOM 7 comprise entre 200 et 350 mm.

Si on considère que l'on a n buses d'humidification ayant chacune un angle de jet B, on respecte de préférence la relation suivante :

$$D = (L/2n)/\tan(\beta/2)$$

On peut par exemple choisir d'avoir 1, 2 ou 3 buses d'humidification ayant comme angle de jet 30°, 45° ou 60°.

Ainsi pour un même débit, plusieurs configurations de buses d'humidification peuvent être choisies. On choisira de préférence la configuration minimisant le nombre de buses d'humidification.

On obtient ainsi en sortie de la boucle de recirculation des REFIOM humidifiés de manière homogène.

La boucle de recirculation comporte également un mélangeur 60 dans lequel tombent les REFIOM humidifiés. Le mélangeur 60 comporte de préférence une vis à double pale.

Le mélangeur 60 débouche dans la gaine des fumées 70 en amont des moyens de filtration et en aval des moyens d'injection de la chaux. On injecte ainsi les REFIOM humidifiés avec les fumées à traiter mélangées à la chaux.

Le mélange obtenu est homogène et sans boulettes, de sorte qu'il n'encrasse pas les moyens de filtration 2.

**Revendications**

**1.** Installation de traitement à la chaux de fumées d'incinération d'ordures ménagères, l'installation comportant :

- des moyens d'injection (1) de chaux dans les fumées d'incinération ;
- des moyens de filtration (2) des poussières aptes à purifier les fumées d'incinération et à produire des résidus d'épuration des fumées d'incinération des ordures ménagères, appelées « REFIOM » ;
- une boucle de recirculation (3) agencée pour récupérer une partie des REFIOM produits par les moyens de filtration (2) et pour les réinjecter en amont des moyens de filtration (2), la boucle de recirculation comportant :

  ◦ des moyens de formation (8) configurés pour former un film de REFIOM (7) vertical et d'épaisseur sensiblement constante ;
  ◦ des moyens d'injection (50) d'eau sur le film de REFIOM (7) agencés pour humidifier le film de REFIOM (7) suivant une direction sécante au film de REFIOM ;
◦ des moyens de mélange (70) agencés pour homogénéiser les REFIOM humidifiés puis les injecter dans les fumées d'incinération mélangées à la chaux en amont des moyens de filtration (2),

dans laquelle les moyens de formation (8) du film de REFIOM comportent un déversoir en forme de pyramide tronquée, le déversoir présentant une extrémité inférieure (42) d'une largeur intérieure (11) comprise entre 30 mm et 50 mm, de préférence égale à 40 mm.

2. Installation selon la revendication précédente, dans laquelle le déversoir présente une extrémité inférieure (42) d'une longueur intérieure comprise entre 90% et 110%, de préférence égale, à un nombre L donné par

$$L = \dot{m}[kg/h]/l \ [mm]$$

Où :

$\dot{m}[kg/h]$ est le débit en kilogramme par heure de REFIOM introduits dans l'extrémité supérieure du déversoir ;
l est la largeur intérieure en millimètres du déversoir.

3. Installation selon l'une des revendications 1 à 2, dans laquelle le déversoir présente une hauteur comprise entre 90% et 110%, de préférence égale, à un nombre H donné par :

$$H = \ln \ (\dot{m}[kg/h]/4) \times 350 \ [mm]$$

Où:
$\dot{m}[kg/h]$ est le débit en kilogramme par heure de REFIOM introduits dans l'extrémité supérieure du déversoir.

4. Installation selon l'une des revendications précédentes, dans laquelle le déversoir comporte deux parois latérales (43) inclinées, chaque paroi latérale (43) inclinée formant, avec un plan vertical, un angle inférieur à 30°.

5. Installation selon l'une des revendications précédentes, dans laquelle les moyens de formation (8) du film de REFIOM comportent une écluse rotative (30) agencée pour décharger un débit constant de REFIOM dans l'extrémité supérieure (41) du déversoir.

6. Installation selon l'une des revendications précédentes, comportant des moyens de réglage agencés pour modifier l'épaisseur du film de REFIOM formé.

7. Installation selon l'une des revendications précédentes, dans laquelle les moyens d'injection (50) d'eau comportent une rangée de buses d'humidification (51) agencées pour injecter de l'eau dans le film de REFIOM (7) suivant une direction sécante au film de REFIOM.

8. Installation selon la revendication précédente, dans laquelle les buses d'humidification (51) sont agencées pour injecter de l'eau suivant une direction formant un angle $\alpha$ avec le film de REFIOM, l'angle $\alpha$ étant compris entre 35° et 55°, de préférence égal à 45°.

9. Installation selon l'une des revendications précédentes, dans laquelle les moyens de filtration (2) des poussières comportent un filtre à manche.

10. Procédé de traitement à la chaux de fumées d'incinération d'ordures ménagères, le procédé comportant les étapes suivantes :

- Injection de chaux dans les fumées d'incinération ;
- Récupération des poussières contenues dans les fumées d'incinération de façon à former des fumées purifiées et des résidus d'épuration des fumées d'incinération des ordures ménagères, appelées « REFIOM » ;
- Formation d'un film de REFIOM avec une partie des REFIOM produits lors de l'étape de récupération des poussières, le film de REFIOM étant vertical et d'épaisseur sensiblement constante, la formation du film ayant lieu au moyen d'un déversoir en forme de pyramide tronquée, le déversoir présentant une extrémité inférieure (42) d'une largeur intérieure (l1) comprise entre 30 mm et 50 mm, de préférence égale à 40 mm;
- Injection d'eau sur le film de REFIOM agencés pour former des REFIOM humidifiés, suivant une direction sécante au film de REFIOM ;
- Mélange des REFIOM humidifiés avec les fumées d'incinération mélangées à la chaux préalablement à l'étape de récupération des poussières.

**Patentansprüche**

1. Anlage zur Behandlung mit Kalk von Rauchgasen aus der Verbrennung von Haushaltsabfällen, wobei die Anlage aufweist:

   - Mittel zum Einleiten (1) von Kalk in die Verbrennungsrauchgase;
   - Mittel zum Filtern (2) der Stäube, die imstande sind, die Verbrennungsrauchgase zu reinigen und Rückstände aus der Reinigung der Haushaltsabfall-Verbrennungsrauchgase zu erzeugen, bezeichnet als "REFIOM";
   - eine Rezirkulationsschleife (3), die eingerichtet ist, um einen Teil der von den Filtrationsmitteln (2) erzeugten REFIOM zurückzugewinnen und sie oberstromig zu den Filtrationsmitteln (2) erneut einzuleiten, wobei die Rezirkulationsschleife aufweist:

     ◦ Bildungsmittel (8), die dazu ausgelegt sind, einen vertikalen und etwa konstanten dicken REFIOM-Film (7) zu bilden;
     ◦ Mittel zum Spritzen (50) von Wasser auf den REFIOM-Film (7), die eingerichtet sind, um den REFIOM-Film (7) in einer zum REFIOM-Film schneidenden Richtung zu befeuchten;
     ◦ Mischmittel (70), die eingerichtet sind, um die befeuchteten REFIOM zu homogenisieren und sie dann oberstromig zu den Filtrationsmittel (2) in die mit Kalk gemischten Verbrennungsrauchgase einzuspritzen,

   wobei die Mittel zum Bilden (8) des REFIOM-Films einen Ablauf in Form einer stumpfen Pyramide aufweisen, wobei der Ablauf ein unteres Ende (42) mit einer inneren Breite (11) aufweist, die zwischen 30 mm und 50 mm liegt, vorzugsweise gleich 40 mm beträgt.

2. Anlage nach vorangehendem Anspruch, wobei der Ablauf ein unteres Ende (42) mit einer inneren Länge aufweist, die zwischen 90% und 110% liegt, vorzugsweise gleich einer Zahl L ist, gegeben von

$$L = \dot{m}[kg/h]/l[mm]$$

wobei:

$\dot{m}[kg/h]$ der Durchsatz in Kilogramm pro Stunde von in das obere Ende des Ablaufs eingeleiteten REFIOM ist;
l die innere Breite in Millimeter des Ablaufs ist.

3. Anlage nach einem der Ansprüche 1 bis 2, wobei der Ablauf eine Höhe aufweist, die zwischen 90% und 110% liegt, vorzugsweise gleich einer Zahl H ist, gegeben von

$$H = \ln\left(\dot{m}[kg/h]/4\right) \times 350[mm]$$

wobei:
$\dot{m}[kg/h]$ der Durchsatz in Kilogramm pro Stunde von in das obere Ende des Ablaufs eingeleiteten REFIOM ist.

4. Anlage nach einem der vorangehenden Ansprüche, wobei der Ablauf zwei schräge Seitenwände (43) aufweist, wobei jede schräge Seitenwand (43) mit einer vertikalen Ebene einen Winkel von unter 30° bildet.

5. Anlage nach einem der vorangehenden Ansprüche, wobei die Mittel zum Bilden (8) des REFIOM-Films eine rotierende Schleuse (30) aufweisen, die eingerichtet ist, um eine konstante Menge REFIOM in das obere Ende (41) des Ablaufs einzuspeisen.

6. Anlage nach einem der vorangehenden Ansprüche, aufweisend Einstellmittel, die zum Ändern der Dicke des gebildeten REFIOM-Films eingerichtet sind.

7.  Anlage nach einem der vorangehenden Ansprüche, wobei die Mittel zum Einleiten (50) von Wasser eine Reihe Befeuchtungsdüsen (51) aufweisen, die eingerichtet sind, um Wasser in den REFIOM-Film (7) in einer zum REFIOM-Film schneidenden Richtung einzuleiten.

8.  Anlage nach vorangehendem Anspruch, wobei die Befeuchtungsdüsen (51) eingerichtet sind, um Wasser in einer Richtung einzuleiten, die mit dem REFIOM-Film einen Winkel $\alpha$ bildet, wobei der Winkel $\alpha$ zwischen 35° und 55° liegt, vorzugsweise gleich 45° beträgt.

9.  Anlage nach einem der vorangehenden Ansprüche, wobei die Filtrationsmittel (2) der Stäube einen Schlauchfilter aufweisen.

10. Verfahren zur Behandlung mit Kalk von Rauchgasen aus der Verbrennung von Haushaltsabfällen, wobei das Verfahren die folgenden Schritte aufweist:

    - Einleiten von Kalk in die Verbrennungsrauchgase;
    - Rückgewinnen der in den Verbrennungsrauchgasen enthaltenen Stäube derart, dass gereinigte Rauchgase und Rückstände aus der Reinigung der Haushaltsabfall-Verbrennungsrauchgase, bezeichnet als "REFIOM", gebildet werden;
    - Bilden eines REFIOM-Films mit einem Teil der während des Schritts der Staubrückgewinnung erzeugten REFIOM, wobei der REFIOM-Film vertikal und von etwa konstanter Dicke ist, wobei die Bildung des Films mittels eines Ablaufs in Form einer stumpfen Pyramide stattfindet, wobei der Ablauf ein unteres Ende (42) mit einer inneren Breite (11) aufweist, die zwischen 30 mm und 50 mm liegt, vorzugsweise gleich 40 mm beträgt;
    - Spritzen von Wasser auf den REFIOM-Film, um befeuchtete REFIOM zu bilden, in einer zum REFIOM-Film schneidenden Richtung;
    - Mischen der befeuchteten REFIOM mit den vor dem Schritt der Staubrückgewinnung mit Kalk gemischten Verbrennungsrauchgasen.

## Claims

1.  Installation for the treatment with lime of fumes from the incineration of household waste, comprising :

    - means (1) for injecting lime into the incineration fumes;
    - dust filtering means (2) capable of purifying the incineration fumes and producing residues from the purification of household waste incineration fumes, known as "REFIOM";
    - a recirculation loop (3) designed to recover some of the REFIOM produced by the filtration means (2) and to reinject it upstream of the filtration means (2), the recirculation loop comprising :

      ∘ forming means (8) configured to form a vertical REFIOM film (7) of substantially constant thickness ;
      ∘ means (50) for injecting water onto the REFIOM film (7) arranged to moisten the REFIOM film (7) in a direction secant to the REFIOM film ;
      ∘ mixing means (70) arranged to homogenise the moistened REFIOM and then inject them into the incineration fumes mixed with lime upstream of the filtration means (2),

    in which the means (8) for forming the REFIOM film comprise a truncated pyramid-shaped weir, the weir having a lower end (42) with an internal width (11) of between 30 mm and 50 mm, preferably equal to 40 mm.

2.  Installation according to the preceding claim, in which the weir has a lower end (42) with an internal length of between 90% and 110%, preferably equal to a number L given by

$$L = \dot{m}[kg/h]/l \ [mm]$$

Where:

m[kg/h] is the flow rate in kilograms per hour of REFIOM introduced into the upper end of the weir;

l is the inside width of the weir in millimetres.

3.  Installation according to one of claims 1 to 2, in which the weir has a height of between 90% and 110%, preferably equal to a number H given by:

$$H = \ln (\dot{m}[kg/h]/4) \times 350 \ [mm]$$

Where:
m[kg/h] is the flow rate in kilograms per hour of REFIOM introduced into the upper end of the weir.

4.  Installation according to one of the preceding claims, in which the weir comprises two inclined side walls (43), each inclined side wall (43) forming, with a vertical plane, an angle of less than 30°.

5.  Installation according to one of the preceding claims, in which the means (8) of forming the REFIOM film comprise a rotary sluice (30) arranged to discharge a constant flow of REFIOM into the upper end (41) of the weir.

6.  Installation according to one of the preceding claims, comprising adjustment means arranged to modify the thickness of the REFIOM film formed.

7.  Installation according to one of the preceding claims, in which the water injection means (50) comprise a row of moistening nozzles (51) arranged to inject water into the REFIOM film (7) in a direction intersecting the REFIOM film.

8.  Installation according to the preceding claim, in which the moistening nozzles (51) are arranged to inject water in a direction forming an angle $\alpha$ with the REFIOM film, the angle $\alpha$ being between 35° and 55°, preferably equal to 45°.

9.  Installation according to one of the preceding claims, in which the dust filtration means (2) comprise a bag filter.

10. A process for treating household waste incineration fumes with lime, the process comprising the following steps:

    - Injection of lime into incineration fumes;
    - Recovery of the dust contained in the incineration fumes to form purified fumes and residues from the purification of household waste incineration fumes, known as "REFIOM";
    - Formation of a REFIOM film with some of the REFIOM produced during the dust recovery stage, the REFIOM film being vertical and of substantially constant thickness, the film being formed by means of a truncated pyramid-shaped weir, the weir having a lower end (42) with an internal width (11) of between 30 mm and 50 mm, preferably equal to 40 mm;
    - Injection of water onto the REFIOM film to form moistened REFIOM, in a direction intersecting the REFIOM film;
    - Mixing of the moistened REFIOM with the incineration fumes mixed with lime prior to the dust recovery stage.

**Fig. 1**

**Fig. 2**

**Fig. 3**

**Fig. 4**

**Fig. 5**

**EP 3 006 097 B1**

**Documents brevets cités dans la description**

- EP 0882490 A